Europäisches Patentamt

European Patent Office

Office européen des brevets

(19)

(11) Veröffentlichungsnummer : **0 298 908 B1**

## (12) EUROPÄISCHE PATENTSCHRIFT

(45) Veröffentlichungstag der Patentschrift :
**29.04.92 Patentblatt 92/18**

(51) Int. Cl.$^5$ : **B29C 47/26,** B29C 47/70, B29C 47/06

(21) Anmeldenummer : **88810036.9**

(22) Anmeldetag : **25.01.88**

(54) **Koextrusionsvorrichtung.**

(30) Priorität : **08.07.87 CH 2595/87**

(43) Veröffentlichungstag der Anmeldung :
**11.01.89 Patentblatt 89/02**

(45) Bekanntmachung des Hinweises auf die
Patenterteilung :
**29.04.92 Patentblatt 92/18**

(84) Benannte Vertragsstaaten :
**AT BE CH DE ES FR GB GR IT LI LU NL SE**

(56) Entgegenhaltungen :
**FR-A- 2 087 753
FR-A- 2 180 737
FR-A- 2 357 042
FR-A- 2 400 424**

(56) Entgegenhaltungen :
**GB-A- 1 150 654
US-A- 2 952 873
US-A- 3 090 994
US-A- 4 107 246
PLASTVERARBEITER, Band 36, Nr. 3, März
1985, Seiten 12-23, Speyer, DE; M. WACHS-
MANN: "Mehrschichtig heisst vielseitig"**

(73) Patentinhaber : **SOPLAR SA
Transportstrasse 3
CH-9450 Altstätten (CH)**

(72) Erfinder : **Lehner, Alwin
Allmendstrasse 81
A-6971 Hard (AT)**

(74) Vertreter : **Riederer, Conrad A., Dr.
Bahnhofstrasse 10
CH-7310 Bad Ragaz (CH)**

Jouve, 18, rue Saint-Denis, 75001 PARIS

EP 0 298 908 B1

## Beschreibung

Die Erfindung betrifft eine Koextrusionsvorrichtung mit mindestens zwei Extrusionsköpfen zur Herstellung von Schläuchen für im Blasverfahren herzustellende Mehrschicht-Hohlkörper, mit einem Extruder für jede herzustellende Schicht und je einem Zufuhrkanal für jede durch den jeweiligen Extrusionskopf herzustellende Schicht.

Eine derartige Koextrusionsvorrichtung ist beispielsweise aus der Druckschrift "Coextrusion - Fortschritte der Blasformtechnik", Firma BEKUM, Druckdatum 11.86, bekannt. Die Druckschrift zeigt auf Seite 12 einen sogenannten Zweifachkopf. Hierbei wird es für erforderlich gehalten, die Zufuhrkanäle in bezug auf ihre rheologische Eigenschaften sorgfältig auszulegen, um eine ausreichende Flexibilität hinsichtlich der Verarbeitbarkeit eines bestimmten Spektrums von Materialien und die Verweilzeit der thermisch empfindlicheren unter den zu verarbeitenden Kunststoffen sicherzustellen.

In der Verarbeitung thermoplastischer Kunststoffe hat sich die Blasformtechnik durch überdurchschnittliche Wachstumsraten ausgezeichnet. In den letzten Jahren ist die Kostensteigerung der konkurrierenden Materialien, Glas, Metall und Papier eindeutig zu Gunsten der Kunststoffe verlaufen. Neue Herstell- und Verarbeitungstechnologien haben einen Grossteil der erhöhten Rohstoffbasiskosten aufgefangen. Das gesteigerte Energiebewusstsein hat gerade die Kunststoffe favorisiert, denn in der Gesamtenergiebilanz schneiden Kunststofferzeugnisse wesentlich besser ab als Erzeugnisse aus den klassischen Werkstoffen. Zur Herstellung eines Kunststoffbehälters wird weniger Energie benötigt als zur Herstellung eines Glas- oder Metallbehälters.

Ursprünglich wurden nur einschichtige Hohlkörper im Blasverfahren hergestellt. Dabei bediente ein Extruder zwei Blasstationen. Diese waren mit Einfach- oder Zweifachformen, einige auch mit Drei- oder Vierfachformen bestückt (Publikation "Blasmaschinen FHB Voith Fischer", Ausgabe 6, 77, S. 4 und 10 Abb. 10). Bereits bei einschichtigen Hohlkörpern führte die Verwendung von Mehrfachköpfen zu Problemen. So weist die FR-A-2 087 753 darauf hin, dass bei Mehrfachköpfen die Auslassgeschwindigkeit von einer Anzahl von Faktoren abhängt, insbesondere von der Temperatur des einzelnen Extrusionskopfes, der Weglänge, welche der flüssige Kunststoff bis zum Extrusionskopf zurücklegen muss, und dem Druck beim jeweiligen Extrusionskopf. Es wird weiter darauf hingewiesen, dass die Auslassgeschwindigkeit bei allen Extrusionsköpfen identisch und gleichmässig sein muss, damit alle Formlinge gleichartig sind. Gleichartige Formlinge seien die Voraussetzung dafür, dass auch alle geblasenen Hohlkörper identische Eigenschaften hätten. Zur Lösung des Problems schlägt die Fr-A-2 087 753 vor, die Drücke bei den Extrusionsköpfen zu vergleichen und die Druckunterschiede als Signal für die Temperatursteuerung des flüssigen Kunststoffes in den einzelnen Extrusionsköpfen zu verwenden. Eine solche Steuerung ist jedoch relativ träge.

Die FR-A-2 180 737 beschreibt einen Mehrfachkopf für eine Draht- oder Kabelisoliermaschine zum gleichzeitigen Umkleiden mehrerer elektrischer Leiter oder Kabel mit einem thermoplastischen Kunststoff. Dieser Kopf weist vier Filieren auf. Jede dieser Filieren besitzt ein konisches Ende, das von einem Schmelzezufuhrkanal mit kreisförmigem Querschnitt umgeben ist. Die Schmelzezufuhrkanäle der vier Filieren werden über einen gemeinsamen Speisekanal versorgt, wobei am Eingang jedes Schmelzezufuhrkanals eine Dosierschraube mit einer konischen Spitze vorgesehen ist. Im Betrieb der Draht- oder Kabelisoliermaschine werden die vier elektrischen Leiter oder Kabel synchron durch die Filieren gezogen und beim Austritt aus den Filieren mit Kunststoff beschichtet. Durch Verstellen der Dosierschrauben kann dafür gesorgt werden, dass jeder der vier Leiter oder jedes der vier Kabel praktisch gleich wie die übrigen Leiter oder Kabel mit Isoliermaterial beschichtet wird. Mit diesem Draht- oder Kabelisolierverfahren kann nur eine einzige Schicht auf den Draht oder das Kabel aufgetragen werden, wobei die Vorschubgeschwindigkeit durch die Geschwindigkeit des durch die Filieren geführten Drahtes und nicht etwa durch die Menge der zugeführten Schmelze bestimmt wird.

In der FR-A-2 400 424 wird eine Vorrichtung zur Herstellung von isolierten Drähten oder von rohrförmigen Extrusionsprodukten beschrieben, welche einen Extruder aufweist, der über vier Zweigleitungen zwei Extrusionsköpfe speist. Je zwei Zweigleitungen sind symmetrisch zueinander angeordnet. Je eine Zweigleitung ist direkt mit einem der Extrusionsköpfe verbunden, je eine andere Zweigleitung führt über eine Dosiervorrichtung, z.B. eine Zahnradpumpe oder ein Ventil, zu einem der Extrusionsköpfe. Vor der Dosiervorrichtung befindet sich eine Injektionsvorrichtung, z.B. eine weitere Zahnradpumpe, mit welcher ein Zusatzmittel, z.B. ein Farbstoff, in die genannte andere Zweigleitung gepumpt wird. Die beschriebene Vorrichtung zur Herstellung von isolierten Drähten oder rohrförmigen Extrusionsprodukten gestattet es, diese Produkte aus dem gleichen Kunststoffgrundmaterial mit farbigen Streifen oder einer farbigen oder gegen Ultraviolettstrahlen geschützte Aussenschicht zu versehen. Die Druckschrift gibt jedoch keine Hinweise zur Herstellung von blasgeformten Hohlkörpern aus verschiedenen Kunststoffmaterialien.

Durch die CH-B-493 332 ist ein Verteiler für Kunststoffextruder mit zwei an diesen angeschlossenen Werkzeugen bekannt geworden. Der Verteiler besitzt einen in der Mitte gespeisten Verteilerkanal. An jedem Ende des Verteilerkanals ist koaxial dazu ein von aussen zu betätigendes Ventil angeordnet. Durch diese Ventile

2

sind zwei Verteilerkanalabzweigungen querschnittsmässig einzeln einstellbar und abstellbar. Dadurch soll sichegestellt werden, dass den angeschlossenen Werkzeugen genau die vorgegebene Menge an plastifiziertem Kunststoff zugeführt wird, so dass bei beiden Werkzeugen die Extrusionsgeschwindigkeit die gleiche ist. Weiter soll durch die Ventile die Möglichkeit gegeben werden, einzelne Werkzeuge abzuschalten, um sie zu reinigen, während der Extruder mit anderen Werkzeugen weiter arbeitet. Die gezeigten Blaswerkzeuge werden axial von unten her gespeist. Sie sind in grossem Abstand voneinander angeordnet und weisen je eine nach oben gerichtete, ringförmige Extrusionsöffnung mit grossem Durchmesser auf. Bei diesen Blaswerkzeugen handelt es sich offensichtlich um Blaswerkzeuge für einschichtige Schlauchfolien, wie sie z.B. für Kehrichtsäcke verwendet werden. Die Patentschrift zeigt lediglich die Speisung von zwei Extrusionsköpfen mit einer einzigen Kunstharzmasse. Die Patentschrift gibt also keine konkreten Hinweise für die Anordnung von mehr als zwei Extrusionsköpfen und auch keine Hinweise für die Speisung von Koextrusionsköpfen mit verschiedenen Kunstharzsorten zur Herstellung von mehrschichtigen Hohlkörpern.

Viele Kunststoffe haben nicht die Barriere-Eigenschaften von Glas oder Metall, wie sie zum Schutz des Füllgutes vor eindringenden Substanzen oder.zum Rückhalt von notwendigen Bestandteilen des Füllgutes erforderlich sind. Das Füllgut soll nicht mit eindringenden Substanzen, z.B. Wasser oder Sauerstoff, physikalisch oder chemisch reagieren. Das Füllgut soll auch nicht Gase, Aromen oder Duftstoffe verlieren. Alle diese Vorgänge können nämlich das Füllgut beeinträchtigen, z.B. bei Ketchup zu Verfärbungen und Geschmacksveränderungen, ja sogar zum Verderb führen.

Nun gibt es zwar Kunststoffe, die diese oder jene Barriere-Eigenschaften haben, doch sind diese Kunststoffe vielfach zu teuer oder weisen andere Eigenschaften auf, welche eine wirtschaftliche Verwertung auf dem Verpackungssektor ausschliessen.

Seit einigen Jahren hat sich in der Blasformtechnik die Koextrusion durchgesetzt. Mit diesem Verfahren können mehrschichtige Hohlkörper hergestellt werden. Besonders bekannt geworden ist die Herstellung einer Ketchup-Flasche, die vorwiegend aus Polypropylen besteht. Sie ist flach, auspressbar und im Gegensatz zum traditionellen Packmittelmaterial Glas leicht und unzerbrechlich. Gegenüber der gleichen einschichtig aus Polypropylen hergestellten Flasche hat die koextrudierte Flasche eine um bis zu zwölf Monate gesteigerte Lagerfähigkeit für Ketchup.

Die bekannte Ketchup-Flasche besteht aus folgenden Schichten:

Polypropylen 370 μm

Haftvermittler 20 μm

Ethylen-Vinyl-Alkohol-Kopolymer 20 μm

Haftvermittler 20 μm

Polypropylen 370 μm

Die Schicht aus Ethylen-Vinyl-Alkohol-Kopolymer wirkt als Gasbarriere für Sauerstoff und verhindert daher eine Oxidierung und die damit einhergehende Verfärbung des Inhalts. Wie das obige Beispiel zeigt, wird ausserordentlich wenig Barrierematerial benötigt ("Sperrschichtbildung bei Kunststoffhohlkörpern" VDI-Verlag GmbH 1986, S. 42).

Koextrusionsvorrichtungen für die Mehrschicht-Blasformtechnik sind relativ teuer, weil für jede herzustellende Schicht ein separater Extruder notwendig ist. Dies bietet keine Probleme, wenn der Koextrusionsvorrichtung eine als sogenannter Rundläufer ausgebildete Mehrstation-Blasformeinheit nachgeschaltet wird. Bei einem Rundläufer kann nämlich ein Schlauchstück nach dem anderen an die nacheinander an die Koextrusionsvorrichtung zugeführten Blasformen abgegeben werden. Es genügt somit ein Extrusionskopf für eine Vielzahl von Einfach-Blasformen. Ist jedoch der Koextrusionsvorrichtung eine Einstation-Blasformeinheit mit einer Mehrfach-Blasform nachgeschaltet, so müssen notwendigerweise mehrere Schlauchstücke gleichzeitig in die Blasform eingeführt werden. Es sind so viele Extrusionsköpfe notwendig wie in der Blasform gleichzeitig Hohlkörper geblasen werden sollen.

Wie bereits vorher erwähnt wurde, sind aber für jeden Extrusionskopf soviele Extruder notwendig, wie Schichten herzustellen sind. Daraus ergibt sich klar der Nachteil der Einstationen-Blasformeinheit. Sollten beispielsweise mit einer Vierfach-Blasform fünfschichtige Hohlkörper hergestellt werden, so wären dazu zwanzig Extruder notwendig.

Dies ist aber nicht nur sehr teuer, sondern stellt auch ein praktisch unlösbares Platzproblem dar. Die Anlage würde sehr unübersichtlich und schwierig in Bedienung und Unterhalt.

Angesichts der Tatsache, dass bereits die erstgenannte Publikation "Blasmaschinen FHB Voith Fischer" die Verwendung von Vierfachformen zeigt, könntenes naheliegend erscheinen, auch bei Koextrusionsmaschinen Mehrfachformen, z.B. Vierfachformen zu verwenden. Wie aber die Literaturstelle "Bekum, Coextrusion, Fortschritte der Blasformtechnik", Ausgabe 11, 86, zeigt, wurden bisher nur Zweifachformen verwendet. In der letztgenannten Literaturstelle wird darauf hingewiesen, dass rheologisch sorgfältig ausgelegte Fliesskanäle wichtig sind.

Tatsächlich müssen, um unterschiedliche Sichtdicken zu vermeiden, bei beiden Extrusionsköpfen die Zufuhrkanäle genau gleich ausgebildet werden. Ist dies nicht der Fall, so kann eine Schicht dünner werden oder sogar ab brechen, Umgekehrt kann eine Schicht auch zu dick werden. All dies hat aber Folgen, die nicht akzeptiert werden können. Ist nämlich die Schichtdicke der Barriereschicht zu gering, so leidet die Barrierefunktion. Bricht die Barriereschicht sogar ab, so fehlt beim hergestellten Hohlkörper die notwendige Barrierefunktion mindestens an gewissen Stellen. Eine mangelhafte oder gar fehlende Barrierefunktion kann aber auf keinen Fall geduldet werden. Nimmt man aber umgekehrt in Kauf, dass die Schichtdicke der Barriereschicht dicker als vorgesehen wird, so wird mehr teures Barrierematerial verbraucht als zur Erzeugung einer genügenden Barriereschicht eigentlich nötig wäre.

Die vorstehenden Ausführungen zeigen, dass bei der Koextrusion enge Toleranzgrenzen eingehalten werden müssen, um einerseits eine gute Qualität des Produkts und andererseits einen sparsamen Verbrauch von teuren Schichtmaterialien zu gewährleisten.

Bleibt aber die Koextrusion auf die Herstellung eines Schlauches oder höchstens von zwei Schläuchen beschränkt, so stellt dies eine erhebliche Beschränkung der an sich möglichen Produktionskapazität von Einstation-Blasformeinheiten dar. Es können dann pro Arbeitsgang höchstens zwei Hohlkörper hergestellt werden. Bisher wurde aber eine solche Beschränkung als unumgänglich für die Erzielung der erforderlichen Qualität der geblasenen Hohlkörper hingenommen.

Es ist Aufgabe der vorliegenden Erfindung, eine Koextrusionsvorrichtung der eingangs erwähnten Art zu schaffen, die auch bei Verwendung von mehr als zwei Extrusionsköpfen zuverlässig arbeiten kann und keine Platz- und Bedienungsprobleme schafft.

Erfindungsgemäss wird dies mit einer Koextrusionsvorrichtung mit den Merkmalen gemäss Patentanspruch 1 erreicht. Da die Extrusionsköpfe in einem Block angeordnet sind, werden Wärmeverluste vermieden, und es wird die Temperatur bei allen Extrusionsköpfen praktisch gleichgehalten. Die Anordnung des Verteilkanals mit den Abzweigungen in einer am Block befestigten Platte ermöglicht es auch, eine separate Platte für jede Gruppe von Zufuhrkanälen vorzusehen. Diese Platten mit den daran befestigten Drosselventilen können leicht gereinigt und nötigenfalls ausgetauscht werden. Mit den Drosselventilen können die Durchflussraten bei den verschiedenen Extrusionsköpfen reguliert werden, um bei allen Extrusionsköpfen die gewünschte Schichtdicke zu erzielen. Die Erfindung ermöglicht es also, soviele Schlauchstücke gleichzeitig herzustellen, wie zur Beschickung einer Mehrfach-Blasform notwendig sind, aber gleichzeitig die geforderten engen Toleranzgrenzen für die verschiedenen Schichtdicken einzuhalten. Es sind nicht mehr Extruder notwendig als Schichten erzeugt werden müssen. Somit hält sich der Investitionsaufwand im normalen Rahmen. Es entstehen auch keine Platz- und Bedienungsprobleme. Trotzdem kann aber die volle Kapazität einer Einstation-Blasformeinheit ausgenützt werden.

Vorteilhaft weist jedes der Drosselventile einen etwa konischen Ventilsatz auf. Bei dieser Ausbildung ist eine zur Ventilbewegung praktisch lineare Einstellung der Durchflussrate möglich.

Zweckmässigerweise ist jedes der Drosselventile an der Abzweigung des Verteilkanals zum jeweiligen Zufuhrkanal angeordnet. Dies ergibt eine besonders einfache Konstruktion und ermöglicht es, den Zufuhrkanal kurz zu halten.

Vorteilhaft haben die Zufuhrkanäle für je eine herzustellende Schicht ihren Einlass auf der gleichen Höhe in einer Wandung des Blocks. Die verschiedenen Gruppen von Zufuhrkanälen können dabei übereinander im Block angeordnet werden. Dies kann so geschehen, dass die verschiedenen Gruppen von Zufuhrkanälen ihre Einlässe abwechslungsweise auf der einen oder der anderen von zwei einander gegenüberliegenden Seiten des Blocks haben. Dies ergibt eine besonders unterhaltsfreundliche Konstruktion der Koextrusionsvorrichtung.

Die Einstellung der Drosselventile wird erheblich erleichtert, wenn bei jedem Drosselventil ein Druckfühler vorgesehen wird. Es ist auch zweckmässig, bei jedem Drosselventil einen Temperaturfühler vorzusehen. Eine genaue Kontrolle der Temperatur ist wichtig, weil die Fliesseigenschaften der Schmelze stark von der Temperatur abhängig sind.

Druck und Temperatur können durch eine Kontrolleinrichtung überwacht werden, welche beim Auftreten von vorbestimmten Abweichungen Alarm auslöst.

Die Erfindung wird unter Bezugnahme auf die Zeichnung beschrieben. Es zeigt:

Figur 1 eine schematische Darstellung des 5-Schicht-Verfahrens und

Figur 2 einen Block mit vier Extrusionsköpfen

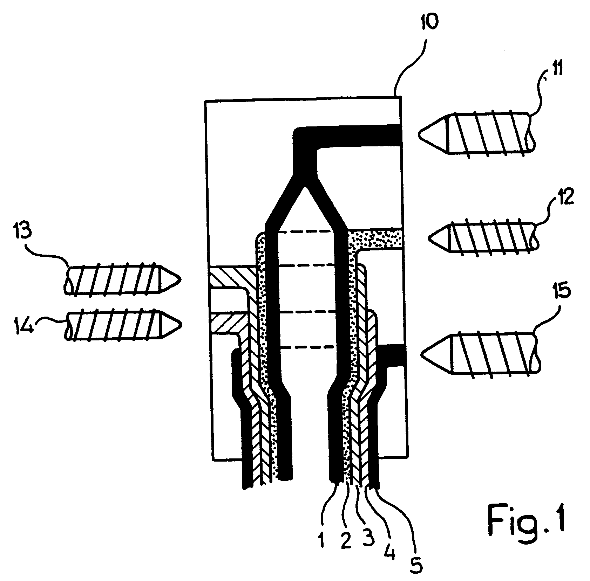

In Figur 1 wird schematisch das 5-Schicht-Verfahren dargestellt, wie es im Werk "Sperrschichtbildung bei Kunststoffhohlkörpern", VDI-Verlag 1986, S. 50 f. beschrieben wird. Für jede herzustellende Schicht 1 bis 5 ist ein Extruder 11, 12, 13, 14, 15 vorgesehen. Bei den Schichten 1 und 5 handelt es sich beispielsweise um Trägerschichten aus Polypropylen, bei den Schichten 2 und 4 um Haftvermittler und bei der Schicht 3 um eine Barriereschicht. Die Zeichnung ist nicht massstäblich. In Wirklichkeit sind die Schichten 2 bis 4 wesentlich dünner als die Trägerschichten 1 und 5. Dies ist bereits einleitend mit Zahlenbeispielen bei der Beschreibung der

EP 0 298 908 B1

bekannten Ketchup-Flasche erwähnt worden.

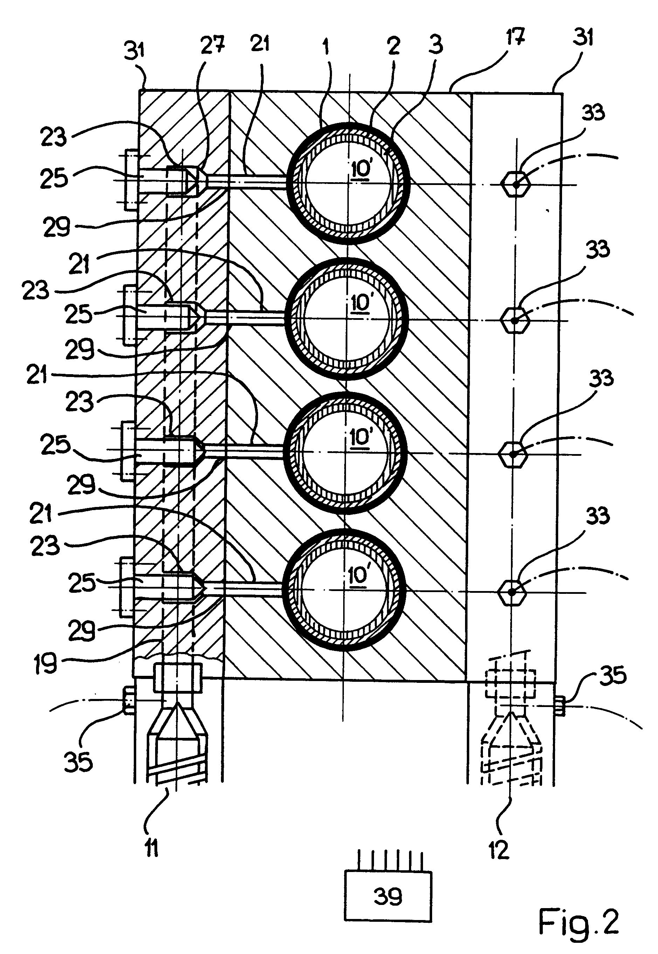

In Figur 2 sind vier Extrusionsköpfe 10′ für ein Dreischichtverfahren in einem Block 17 vorgesehen. Es ist jedoch dem Fachmann ohne weiteres klar, dass auch Extrusionsköpfe für mehr oder weniger als drei Schichten Anwendung finden könnten. Vom jeweiligen Extruder, z.B. Extruder 11, führt ein Verteilkanal 19 zu einem Zufuhrkanal 21. Der Verteilkanal 19 weist an verschiedenen Stellen Abzweigungen 23 auf, die zum entsprechenden Zufuhrkanal 21 führen. Bei jeder Abzweigung 23 ist ein Drosselventil 25 angeordnet, das einen etwa konischen Ventilsatz 27 aufweist.

Die aus der Zeichnung ersichtlichen Zufuhrkanäle 21 bilden eine Gruppe, die in einer Ebene im Block angeordnet ist. Alle Zufuhrkanäle 21 einer Gruppe dienen der Herstellung der gleichen Schicht bei den einzelnen Extrusionsköpfen 10′. Verschiedene Gruppen von Zufuhrkanälen 21 für die verschiedenen Schichten 1 bis 3... sind übereinander im Block angeordnet. In jeder Gruppe von Zufuhrkanälen 21 befinden sich somit die Einlässe 29 auf der gleichen Höhe in einer Wandung des Blocks. Zweckmässigerweise haben dabei verschiedene Gruppen von Zufuhrkanälen 21 ihre Einlässe abwechslungsweise auf der einen oder anderen von zwei einander gegenüberliegenden Seiten des Blocks 17.

Der Verteilkanal 19 mit Abzweigungen 23 befindet sich jeweils in einer Platte 31, die beispielsweise mit Schrauben, (nicht eingezeichnet) am Block 17 befestigt ist. Für jede Gruppe von Verteilkanälen 21 ist daher eine separate Platte 31 vorgesehen. Es wäre aber auch möglich, in einer Platte 31 mehrere Verteilkanäle 19 vorzusehen.

Bei jedem Drosselventil 25 ist ein Druck- und/oder Temperaturfühler 33 vorgesehen. Auch beim Ausgang des jeweiligen Extruders 11, 12... ist ein Druck- und/oder Temperaturfühler 35 vorgesehen. Die Druck- und/oder Temperaturfühler 33 und 35 sind an eine Kontrolleinrichtung 39 angeschlossen, die bei vorbestimmten Abweichungen des Drucks oder der Temperatur Alarm auslöst.

Die beschriebene Koextrusionsvorrichtung hat nun den Vorteil, dass bei jedem Extrusionskopf durch das Ventil 25 die Durchflussrate so geregelt werden kann, dass bei allen Extrusionsköpfen die gleiche Schichtdicke erzielt wird. Dies ermöglicht es, die Leistung einer an sich bekannten Extrusionsmaschine zu erhöhen, weil die Extrusion nicht mehr auf höchstens zwei Extrusionsköpfe beschränkt bleibt.

Es sind verschiedene Abänderungen der Koextrusionsvorrichtung möglich, ohne vom Grundgedanken der Erfindung abzuweichen. So können für gewisse Schichten auch zwei Extruder verwendet werden. Dies ist z.B. dann zweckmässig, wenn eine sehr hohe Durchflussrate erforderlich ist. Weiter ist es auch möglich, wenn es die rheologischen Eigenschaften des zu verarbeitenden Materials erfordern, für einzelne Schichten in bekannter Weise je einen Extruder pro Extrusionskopf oder pro zwei Extrusionsköpfe vorzusehen.


## Patentansprüche

1. Koextrusionsvorrichtung mit mindestens zwei Extrusionsköpfen (10′) zur Herstellung von Schläuchen für im Blasverfahren herzustellende Mehrschicht-Hohlkörper, mit einem Extruder (11 bis 15) für jede herzustellende Schicht (1 bis 5) und je einem Zufuhrkanal (21) für jede durch den jeweiligen Extrusionskopf herzustellende Schicht, dadurch gekennzeichnet, dass die Extrusionsköpfe (10′) in einem Block (17) angeordnet sind, dass jedem Zufuhrkanal (21) für das Herstellen einer bestimmten Schicht (1 bis 5) ein an einen der Extruder (11 bis 15) angeschlossener Verteilkanal (19) zugeordnet ist, dass der Verteilkanal (19) mit Abzweigungen (23) in einer am Block befestigten Platte (31) angeordnet ist und dass jeder der Zufuhrkanäle (21) ein Drosselventil (25) aufweist.

2. Koextrusionsvorrichtung nach Anspruch 1, dadurch gekennzeichnet, dass jedes der Drosselventile (25) einen etwa konischen Ventilsitz (27) aufweist.

3. Koextrusionsvorrichtung nach Anspruch 1 oder 2, dadurch gekennzeichnet, dass jedes der Drosselventile (25) an der Abzweigung (23) des Verteilkanals (19) zum jeweiligen Zufuhrkanal (21) angeordnet ist.

4. Koextrusionsvorrichtung nach einem der Ansprüche 1 bis 3, dadurch gekennzeichnet, dass die Zufuhrkanäle (21) für je eine herzustellende Schicht (1 bis 5) ihren Einlass (29) auf der gleichen Höhe in einer Wandung des Blocks (17) haben.

5. Koextrusionsvorrichtung nach einem der Ansprüche 1 bis 4, dadurch gekennzeichnet, dass die Zufuhrkanäle (21) aller Extrusionsköpfe (11 bis 15) für die gleiche herzustellende Schicht (1 bis 5) als Gruppe in einer Ebene im Block (17) angeordnet sind.

6. Koextrusionsvorrichtung nach Anspruch 5, dadurch gekennzeichnet, dass verschiedene Gruppen von Zufuhrkanälen (21) für die verschiedenen Schichten (1 bis 5) im Block (17) angeordnet sind.

7. Koextrusionsvorrichtung nach Anspruch 5 oder 6, dadurch gekennzeichnet, dass die verschiedenen Gruppen von Zufuhrkanälen (21) ihre Einlässe (29) abwechslungsweise auf der einen oder anderen von zwei einander gegenüberliegenden Seiten des Blocks (17) haben.

8. Koextrusionsvorrichtung nach einem der Ansprüche 1 bis 7, dadurch gekennzeichnet, dass bei jedem Drosselventil (25) ein Druckfühler und/oder Temperaturfühler (33) vorgesehen ist.

9. Koextrusionsvorrichtung nach einem der Ansprüche 1 bis 8, dadurch gekennzeichnet, dass beim Ausgang des jeweiligen Extruders (11, 12...) ein Druckfühler und/oder Temperaturfühler (33) vorgesehen ist.

10.Koextrusionsvorrichtung nach einem der Ansprüche 1 bis 9, dadurch gekennzeichnet, dass Druckfühler und/oder Temperaturfühler (33, 35) an eine Kontrolleinrichtung (39) angeschlossen sind, die bei vorbestimmten Abweichungen Alarm auslöst.

**Claims**

1. A co-extrusion device comprising at least two extrusion heads (10') for the production of flexible tubes for multi-ply hollow elements to be made by the blow process, comprise an extruder (11 - 15) for each ply (1 - 5) and a feed duct (21) for each ply to be male by the associated extrusion head, characterised in that the extrusion heads (10') are disposed in a block (17), in that each feed duct (21) for making a given ply (1 - 5) has an associated distributing duct (19) connected to one of the extruders (11 - 15), in that the distributing duct (19) is disposed with branches (23) in a plate (31) fixed to the block, and in that each of the feed ducts (21) has a throttle valve (25).

2. A co-extrusion device according to claim 1, characterised in that each of the throttle valves (25) has a substantially conical valve seat (27).

3. A co-extrusion device according to claim 1 or 2, characterised in that each of the throttle valves (25) is disposed at the branch (23) of the distributing duct (19) to the associated feed duct (21).

4. A co-extrusion device according to any one of claims 1 to 3, characterised in that the feed ducts (21) for each ply (1 - 5) have their inlets (29) at the same height in a wall of the block (17).

5. A co-extrusion device according to any one of claims 1 to 4, characterised in that the feed ducts (21) of all the extrusion heads (11 - 15) for the same ply (1 - 5) are disposed as a group in one piano in the block (17).

6. A co-extrusion device according to claim 5, characterised in that different groups of feed ducts (21) for the various plies (1 - 5) are disposed in the block (17).

7. A co-extrusion device according to claim 5 or 6, clharacterised in that the different groups of feed ducts (21) have their inlets (29) alternately on one or other of two opposite sides of the block (17).

8. A co-extrusion device according to any one of claims 1 to 7, characterised in that a pressure sensor and/or temperature sensor (33) is provided at each throttle valve (25).

9. A co-extrusion device according to any one of claims 1 to 8, characterised in that a pressure sensor and/or temperature sensor (33) is provided at the outlet of the associated extruder (11, 12...).

10. A co-extrusion device according to any one of claims 1 to 9, characterised in that the pressure sensors and/or temperature sensors (33, 35) are connected to a monitoring device (39) which triggers an alarm in the event of pre-determined deviations.

**Revendications**

1. Dispositif de coextrusion, comprenant au moins deux têtes d'extrusion (10') pour la formation de tubes flexibles destinés à la fabrication de corps creux multicouches par la méthode de soufflage, avec une extrudeuse (11 à 15) pour chaque couche à former (1 à 5) et un canal d'alimentation (21) pour chaque couche devant être formée par la tête d'extrusion respective, caractérisé en ce que les têtes d'extrusion (10') sont disposées dans un bloc (17), en ce qu'à chaque canal d'alimentation (21) pour la formation d'une couche déterminée (1 à 5) est adjoint un canal distributeur (19) raccordé à l'une des extrudeuse, en ce que le canal distributeur (19) est disposé, avec des bifurcations (23), dans une plaque (31) fixée au bloc, et en ce que chacun des canaux d'alimentation (21) présente une valve d'étranglement (25).

2. Dispositif de coextrusion selon la revendication 1, caractérisé en ce que chacune des valves d'étranglement (25) présente un siège de soupape (27) à peu près conique.

3. Dispositif de coextrusion selon la revendication 1 ou 2, caractérisé en ce que chacune des valves d'étranglement (25) est disposée à la bifurcation (23) du canal distributeur (19) vers le canal d'alimentation (21) respectif.

4. Dispositif de coextrusion selon l'une quelconque des revendications 1 à 3, caractérisé en ce que les canaux d'alimentation (21) pour chaque couche (1 à 5) à former ont leur admission (29) à la même hauteur dans une paroi du bloc (17).

5. Dispositif de coextrusion selon l'une quelconque des revendications 1 à 4, caractérisé en ce que les canaux d'alimentation (21) de toutes les têtes d'extrusion (11 à 15) pour la même couche (1 à 5) à former sont disposés en groupe dans un plan dans le bloc (17).

6. Dispositif de coextrusion selon la revendication 5, caractérisé en ce que différents groupes de canaux d'alimentation (21) pour les différentes couches (1 à 5) sont disposés dans le bloc (17).

7. Dispositif de coextrusion selon la revendication 5 ou 6, caractérisé en ce que les différents groupes de canaux d'alimentation (21) ont leurs admissions (29) situées alternativement sur l'un ou l'autre de deux côtés mutuellement opposés du bloc (17).

8. Dispositif de coextrusion selon l'une quelconque des revendications 1 à 7, caractérisé en ce qu'il est prévu, près de chaque valve d'étranglement (25), un capteur de pression et/ou une sonde de température (33).

9. Dispositif de coextrusion selon l'une quelconque des revendications 1 à 8, caractérisé en ce qu'il est prévu, à la sortie de chaque extrudeuse (11, 12...), un capteur de pression et/ou une sonde de température (33).

10. Dispositif de coextrusion selon l'une quelconque des revendications 1 à 9, caractérisé en ce que les capteurs de pression et/ou les sondes de température (33, 35) sont reliés à un dispositif de contrôle qui déclenche une alarme lorsque des écarts prédéterminés sont atteints.

Fig.1

Fig.2